(19) Europäisches Patentamt
European Patent Office
Office européen des brevets

(11) **EP 3 516 035 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **17727560.9**

(22) Anmeldetag: **29.05.2017**

(51) Internationale Patentklassifikation (IPC):
*C12H 1/18* (2006.01)

(52) Gemeinsame Patentklassifikation (CPC):
**C12H 1/18**

(86) Internationale Anmeldenummer:
**PCT/EP2017/062869**

(87) Internationale Veröffentlichungsnummer:
**WO 2018/054560 (29.03.2018 Gazette 2018/13)**

(54) **VORRICHTUNG UND VERFAHREN ZUM THERMISCHEN BEHANDELN VON BIER**

DEVICE AND METHOD FOR THERMALLY TREATING BEER

DISPOSITIF ET PROCÉDÉ DE TRAITEMENT THERMIQUE DE BIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2016 DE 102016218297**

(43) Veröffentlichungstag der Anmeldung:
**31.07.2019 Patentblatt 2019/31**

(73) Patentinhaber: **Krones AG**
**93073 Neutraubling (DE)**

(72) Erfinder: **FEILNER, Roland**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 1 106 083    CH-A- 438 901**
**DE-A1- 3 040 943    DE-C1- 4 338 334**
**GB-A- 2 091 079**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Gebiet der Erfindung**

Die vorliegende Erfindung betrifft das thermische Behandeln, insbesondere Pasteurisieren und Stabilisieren, von Bier mithilfe eines Kurzzeiterhitzers und einer Heißhalteeinrichtung und eine Vorrichtung zum thermischen Behandeln von Bier.

**Stand der Technik**

Vor der Abfüllung wird Bier im Allgemeinen erhitzt, um Keime abzutöten und somit die biologische Stabilität zu erhöhen beziehungsweise zusätzlich im Fall von filtrierten Bieren, wie Weißbieren, die Trübungsstabilität zu erhöhen.

Das Erhitzen erfolgt typischerweise in Kurzzeiterhitzungsanlagen. In solchen Anlagen wird das Bier in einem Kurzzeiterhitzer auf eine Pasteurisierungstemperatur erhitzt und nachfolgen in einer Heißhalteeinrichtung über einen bestimmten Zeitraum heiß gehalten. Die Heißhalteeinrichtung umfasst eine in Schleifen verlegte Rohrleitung (Rohrschlange), in der das Bier heiß gehalten wird. Das Bier kann schließlich über eine Nachkühlsektion und gegebenenfalls über eine Pufferung die Kurzzeiterhitzungsanlage verlassen.

In der Heißhalteeinrichtung wird das Bier auf nahezu konstanter Temperatur gehalten, sodass Keime abgetötet werden können. Die Heißhaltezeit wird so gewählt, dass ein gewünschter Wert der Pasteurisiereinheit PE als kumuliertes Maß für Letalwerte mikrobiologischer Organismen, etwa PE > 20 oder PE > 100, erreicht wird. In die Berechnung der Pasteurisiereinheit geht die Heißhaltezeit t (in Minuten) und die Heißhaltetemperatur T ein:

$$PE = t \cdot 1{,}393^{T-60\,°C} \ \text{(Gleichung 1).}$$

Um die gewünschten PE-Werte zu erreichen, sind herkömmlich relativ große und aufwendige Heißhalteeinrichtungen vonnöten.

Soll nun, wie es in der Praxis meist üblich ist, über eine Heißhaltestrecke (30 Sekunden) filtriertes Bier mit Fokus auf die Mikrobiologie und beziehungsweise Weißbier mit dem zusätzlichen Fokus auf die Trübungsstabilisierung und Inaktivierung schaumnegativer und alterungsforcierender Hefeenzyme produziert werden, ist die thermische Belastung insbesondere für die Weißbiere höher als sie sein müsste.

In der Praxis hat sich ein Wert von mindestens 80°C für die Heißhaltung etabliert, um eine zuverlässige Trübung zu erreichen. Bei konstanter Heißhaltung ergibt dies um ein Vielfaches höhere PE-Werte als es die Mikrobiologie und Enzyminaktivierung eigentlich erfordern würde (max. 220 PE ). Um die 80°C nicht zu unterschreiten, wird in diesem Fall oftmals auf als gleitende PE-Regelung bekannte Regelung gemäß der obigen Gleichung verzichtet, aber nicht auf die Leistungsanpassung (Pufferzeit), was zu einer Verdopplung der thermischen Belastung bei halber Leistung führt. So ergeben sich beispielsweise die in Tabelle 1 gezeigten PE Werte für die angegebenen Volumenströme, Heißhaltezeiten und Temperaturen.

Tabelle 1

|  | Zeit | Temperatur | Bier-PE |
|---|---|---|---|
|  | [Sek] | [°C] | [PE] |
| 100 % Volumenstrom | 30,0 | 80,0 | 378 |
| 50 % Volumenstrom | 60,0 | 80,0 | 757 |

In der DE 30 40 943 A1 wird eine Vorrichtung zur Wärmebehandlung von Milch beschrieben.

Angesichts des beschriebenen Stands der Technik liegt der vorliegenden Erfindung die Aufgabe zugrunde, eine Vorrichtung und ein Verfahren zum thermischen Behandeln von Bier bereitzustellen, die eine zuverlässige Keimreduktion und Stabilisierung für beide Biersorten (Bier und Weißbier) ermöglicht, ohne die geschmackliche Qualität zu beinträchtigen, wobei vergleichsweise raum- und materialsparende Komponenten verwendet werden können. Hierbei muss bei Weißbieren die entsprechende Denaturierungstemperatur überschritten werden, wohingegen diese Temperatur bei filtrierten Bieren nicht erreicht werden darf. Die thermische Belastung sollte so gering wie möglich sein, um auch die Alterungsstabilität positiv zu beeinflussen.

**Beschreibung der Erfindung**

Die oben genannte Aufgabe wird durch eine Vorrichtung zum thermischen Behandeln von Bier mit einem Kurzzeiterhitzer und einer mit dem Kurzzeiterhitzer verbundenen Heißhalteeinrichtung, die eine Rohrschlange (schlaufenartig verlegte Rohrleitung, z.B. aus geraden Rohrstücken und 90° bzw. 180°-Rohrbögen) zum Heißhalten des Bieres aufweist, wobei die Rohrschlange eine Länge von nicht mehr als 12 m, insbesondere 4 m bis 10 m, und einen Durchmesser von 0,05 bis 0,2 m aufweist, gelöst.

Die oben genannte Aufgabe wird weiterhin durch ein Verfahren zum thermischen Behandeln von Bier gelöst. Das Verfahren umfasst hierbei die Schritte des Erhitzens des Biers in einem Kurzzeiterhitzer, des Leitens des erhitzten Biers in eine Heißhalteeinrichtung und des Heißhaltens des Bieres in der Heißhalteeinrichtung, wobei das Heißhalten des Bieres in einer Rohrschlange der Heißhalteeinrichtung mit einer Länge von nicht mehr als 12 m, insbesondere 4 m bis 10 m erfolgt.

Der vorliegenden Erfindung liegt der Gedanke zu Grunde, dass es die Reaktionskinetik der Mikroorganismen unter Berücksichtigung der z-Werte bei ähnlichen Abtötungsraten erlaubt, die Zeit - und damit die Länge der Heißhalteeinrichtung - zu reduzieren und dafür die Temperatur zu erhöhen. Es hat sich zudem gezeigt, dass die erhöhte Temperatur einen positiven Effekt auf die Produktqualität hat.

Herkömmliche Heißhalteeinrichtungen von Kurzzeiterhitzungsanlagen umfassen hingegen Rohrschlangen von 20 m oder 30 m oder mehr. Im Stand der Technik haben sich aus der Tradition heraus derart lange Rohrschlangen etabliert, um die gewünschten PE-Werte für das abzufüllende Bier zu erreichen. Erfindungsgemäß werden nun eine Vorrichtung mit einer deutlich kürzeren Rohrschlange und ein Verfahren zum Heißhalten in einer solchen Vorrichtung bereitgestellt. Durch die gegenüber dem Stand der Technik deutlich verkürzte Rohrleitungslänge können nicht nur Material und somit Kosten eingespart werden, sondern es ist auch eine deutlich kompaktere Bauweise der Heißhalteeinrichtung möglich, sodass benötigter Platz eingespart werden kann. Zudem reduzieren sich die Druckverluste, die Mischphasen und damit Produktverluste. Auch reduziert sich die Differenz zwischen schnellsten und langsamsten Teilchen (also das Verweilzeitverhalten) beim Durchströmen der kürzeren Strecke, was sich wiederum positiv auf die Produktqualität und mikrobiologische Sicherheit auswirkt.

Eine zu kurze Heißhaltestrecke würde aber trotz ausreichend hoher Temperatur die Gefährdung durch Zellverbände und Schutzhüllen erhöhen, weil möglicherweise der Einfluss durch die erschwerte Wärmeleitung und damit länger benötigte Zeit größer ist, als der positive Einfluss einer größeren Temperaturdifferenz. Eine zu hohe Temperatur birgt bei den filtrierten Bieren, die keine Proteindenaturierung erfahren dürfen, die Gefahr einer irreversiblen Pasteur-Trübung. Demnach ist eine gewisse Heißhaltezeit erforderlich, und ein kompletter Entfall der Heißhaltung oder eine Verlagerung in den Wärmeübertragungsapparat, wie beispielsweise in der EP1146116B1 vorgeschlagen, ist nicht möglich.

Der Kurzzeiterhitzer der erfindungsgemäßen Vorrichtung kann dazu ausgebildet sein, das Bier auf eine Temperatur von oberhalb 75 °C, insbesondere oberhalb 80 °C, zu erhitzen.

Weiterhin wird eine Vorrichtung zur Herstellung von Bier mit einer Gärvorrichtung zum Gären des Bieres und einer wie oben beschriebenen Vorrichtung bereitgestellt.

In dem erfindungsgemäßen Verfahren kann das Heißhalten über einen Zeitraum von weniger als 20 s, insbesondere weniger als 15 s, insbesondere weniger als 10 s, erfolgen, und es kann das Bier in dem Kurzzeiterhitzer auf eine Temperatur von oberhalb 75 °C, insbesondere oberhalb 80 °C mit einer Obergrenze von beispielsweise 85 °C, erhitzt werden.

Gemäß Weiterbildungen kann das Bier mit einem Volumenstrom zwischen 10 $m^3$/h und 100 $m^3$/h, insbesondere zwischen 15 $m^3$/h und 90 $m^3$/h, insbesondere zwischen 30 $m^3$/h und 60 $m^3$/h, durch die Heißhalteeinrichtung transportiert werden, und es kann das Bier mit einer Strömungsgeschwindigkeit von zwischen 0,5 m/s und 2 m/s, insbesondere 0,7 m/s und 1,7 m/s, durch die Heißhalteeinrichtung transportiert werden. Im Rahmen der genannten Parameterbereiche können Parameterkombinationen hinsichtlich der Pasteurisierungseigenschaften, Stabilitätseigenschaften sowie der geschmacklichen Qualität des Bieres optimiert werden (s. auch die detaillierte Beschreibung unten).

In dem erfindungsgemäßen Verfahren kann das Verhältnis von Volumenstrom des Bieres zum Durchmesser der Rohrschlange zum Quadrat zwischen L*450 /h und L*1250 /h liegen, wobei L die Länge der Rohrschlange ist. Weiterhin kann in dem erfindungsgemäßen Verfahren das Produkt aus Länge der Rohrschlange und Durchmesser der Rohrschlange zum Quadrat zwischen V*0,0008 h und V*0,0021 h liegen, wobei V der Volumenstrom des Bieres in $m^3$/h ist.

In den genannten Weiterbildungen kann die Leistungsspreizung zwischen 30% und 100%, insbesondere zwischen 50% und 100%, liegen, wobei 100% der Nennleistung bzw. maximalen Leistung entsprechen, oberhalb derer die Heißhaltezeit zu kurz ist, und die 30% insbesondere 50% entsprechen der minimalen Leistung, unterhalb derer die Strömung in der Kurzzeiterhitzungsanlage außerhalb des zulässigen Bereichs liegt.

In den oben genannten Beispielen für die erfindungsgemäße Vorrichtung und das erfindungsgemäße Verfahren kann das Bier ein filtriertes Bier oder ein unfiltriertes Bier, wie Weißbier, sein. Auch kann es ein unter- oder obergäriges Bier sein.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen.

Figur 1 veranschaulicht eine Ausführungsform einer erfindungsgemäßen Vorrichtung zum thermischen Behandeln von Bier.

In Figur 2 werden experimentelle Ergebnisse für das Regeln des Verhältnisses von Volumenstrom zu quadriertem Durchmesser der Rohrschlange einer Heißhalteeinrichtung in Abhängigkeit von der Länge der Rohrschlange gezeigt.

In Figur 3 werden experimentelle Ergebnisse für die Wahl des Verhältnisses der Länge der Rohrschlange der verwendeten Heißhalteeinrichtung multipliziert mit dem quadrierten Durchmesser derselben in Abhängigkeit von dem in der Rohrschlange angelegten Volumenstrom des Biers gezeigt.

In Figur 4 werden Hitzeindikatoren für frisches und gealtertes filtriertes Pils gezeigt.

In Figur 5 werden Hitzeindikatoren für frisches und gealtertes Weißbier gezeigt.

In Figur 6 zeigt eine Partikelgrößenverteilung für Weißbier.

In Figur 7 zeigt Sauerstoff- und Alterungsindikatoren für filtriertes Pils.

In Figur 8 Sauerstoff- und Alterungsindikatoren für Weißbier.

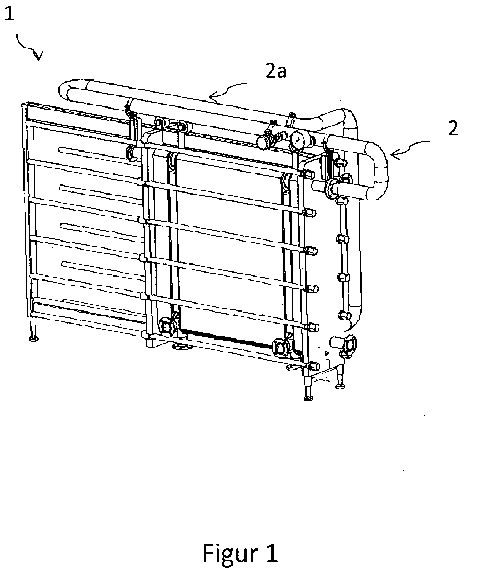

Im Folgenden werden Beispiele für eine erfindungsgemäße Vorrichtung und ein erfindungsgemäßes Verfahren mit Bezug auf die Figuren 1 bis 8 beschrieben.

In Figur 1 wird eine erfindungsgemäße Vorrichtung zum thermischen Behandeln von Bier gezeigt. Der besseren Übersichtlichkeit wegen, sind Behälter, Kühl- und Heizkreisläufe, Pumpen, Armaturen, Rahmengestell etc. nicht abgebildet. Die Vorrichtung umfasst einen Kurzzeiterhitzer 1 und eine Heißhalteeinrichtung 2 mit einer Rohrleitung 2a. Die erfindungsgemäße Vorrichtung weist eine gegenüber dem Stand der Technik deutlich verringerte Rohrleitungslänge der Rohrleitung 2a der Heißhalteeinrichtung 2 und eine gegenüber dem Stand der Technik kompaktere Bauweise auf.

Es wird hierin ein Verfahren zum thermischen Behandeln von Bier bereitgestellt, in dem eine Heißhalteeinrichtung zum Heißhalten von zuvor in einem Kurzzeiterhitzer erhitzten Biers verwendet wird, wobei die Heißhalteeinrichtung eine Rohrschlange mit einer Länge von unterhalb 10 m, insbesondere 4 m bis 10 m, insbesondere 5 m bis 7 m, aufweist. Während im Stand der Technik das Vorurteil herrschte, dass relativ lange Heißhaltezeiten bei einer Temperatur von etwa 72 °C notwendig wären, um eine Pasteurisierung ohne wesentliche Beeinträchtigung der Geschmacksqualität zu erreichen, haben aufwendige Untersuchungen, die der vorliegenden Anmeldung zugrunde liegen, gezeigt, dass eine gewünschte Pasteurisierung beziehungsweise Stabilität des Biers auf relativ kurzen Heißhaltestrecken, d.h., in relativ kurzen Rohrschlangen von Heißhalteeinrichtungen, und bei entsprechend kurzen Heißhaltezeiten (beispielsweise unterhalb von 10 s oder 5 s) sowie bei relativ hohen Temperaturen (beispielsweise oberhalb von 75 °C, etwa bei 80 °C) erreicht werden kann.

Parameter wie die Länge und der Durchmesser der Rohrschlange der Heißhalteeinrichtung, die Heißhaltetemperatur und Heißhaltezeit, die Strömungsgeschwindigkeit sowie der Volumenstrom des erhitzten Bieres durch die Rohrschlange der Heißhalteeinrichtung können nach Maßgabe von experimentell gewonnen Ergebnisse zu den PE-Werten und der geschmacklichen Qualität in dem erfindungsgemäßen Verfahren zum thermischen Behandeln von Bier eingestellt werden.

Zu beachten ist hierbei, dass bei Weißbieren Zellverbände, Zellagglomerate und Schutzhüllen um die Zellagglomerate das Erreichen der letalen Kerntemperatur (für die zu tötenden Keime) verzögern. Eine zu kurze Heißhaltezeit ist somit problematisch. Eine zu hohe Heißhaltetemperatur bringt für filtrierte Biere, die keine Proteindenaturierung erfahren dürfen, die Gefahr einer irreversiblen Pasteur-Trübung mit sich.

Beim den unfiltrierten Bieren, wie Weißbier, kommt neben den genannten Problemen die Notwendigkeit der Trübungsstabilisierung hinzu. Diese erfordert eine entsprechende Aktivierungsenergie um ein Auffalten der Proteinstruktur und die gewünschte Vergröberung der Partikel zu ermöglichen. Setzt eine gleitende PE Regelung ein, kann es durch die sinkende Temperatur zu einer unterschiedlichen Trübungsintensität über die Leistungsanpassung kommen.

Soll nun, wie es in der Praxis meist üblich ist, über eine Heißhaltestrecke (30 Sekunden) filtriertes Bier mit Fokus auf Mikrobiologie und unfiltriertes Bier mit dem zusätzlichen Fokus der Trübungsstabilisierung und Inaktivierung schaumnegativer und alterungsforcierender Hefeenzyme produziert werden, ist die thermische Belastung für die unfiltrierten Biere signifikant höher als sie sein müsste. In der herkömmlichen Praxis hat sich ein Wert von mindestens 80°C etabliert, um eine zuverlässige Trübung zu erreichen. Bei konstanter Heißhaltung resultieren herkömmlich um ein Vielfaches höhere PE-Werte als es die Mikrobiologie und Enzyminaktivierung erfordert. Um die Grenze von 80°C nicht zu unterschreiten wird in diesem Fall oftmals auf die gleitende PE-Regelung verzichtet, was unvorteilhafter Weise im Stand der Technik zu einer Verdopplung der thermischen Belastung bei halber Leistung führt. Neben den Limitierungen für die untere Temperaturgrenze von 80°C bei unfiltriertem Bier begrenzt der $CO_2$-Sättigungsdruck die Maximaltemperatur für die Haltbarmachung und Stabilisierung. Die praktische Obergrenze für die Temperatur kann bei circa 85°C gesehen werden. Auch ist bei dieser Temperatur aufgrund der dann sehr kurzen Verweilzeiten die Gefahr gegeben, dass Zellverbände bzw. Zellagglomerate oder Mikroorganismen mit hohen z-Werten nur ungenügend abgetötet werden.

In diesem Zusammenhang gilt es also, ein optimiertes Heißhalteverfahren zu finden, dass es erlaubt, filtrierte mikrobiologisch stabile Biere zu produzieren und bei dem eine entsprechende Denaturierungstemperatur bei den unfiltrierten Bieren überschritten und bei den filtrierten Bieren nicht erreicht wird.

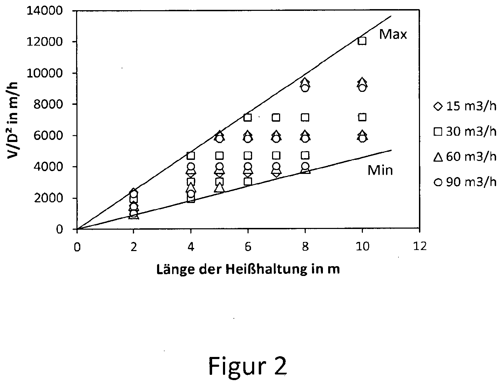

Erfindungsgemäß werden gegenüber dem Stand der Technik verkürzte Heißhaltungsstrecken/-zeiten verwendet. In Figur 2 werden beispielhaft Resultate von Experimenten veranschaulicht, die zufriedenstellende Resultate hinsichtlich der Pasteurisierung/Stabilisierung von Bier und der geschmacklichen Qualität zeigten. Es werden in Figur 2 Resultate für Volumenströme von 15 m³/h bis 90 m³/h gezeigt. Auf der Ordinate ist das Verhältnis des angelegte Volumenstroms des Biers zu dem quadrierten Durchmesser der Rohrschlange der verwendeten Heißhalteeinrichtung aufgetragen, und auf der Abszisse ist die Länge dieser Rohrschlange aufgetragen. Durch die beiden durchgezeichneten Linien werden Grenzen (Max und Min) tolerabler Parameter angezeigt. Der Volumenstrom des Biers beziehungsweise das Verhältnis des Volumenstroms zu dem quadrierten Durchmesser der Rohrschlange kann somit in Abhängigkeit der Länge der Rohrschlange der verwendeten Heißhalteeinrichtung geregelt werden, um gewünschte Resultate hinsichtlich der der Pasteurisierung/Stabilisierung von Bier und der geschmacklichen Qualität desselben zu erreichen. Für die untere Grenze (Min) ergibt sich folgende Abhängigkeit, wobei V der Volumenstrom in m³/h, D der Durchmesser in m und L die Länge der Heißhaltestrecke in m bedeutet:

$$V/D^2 = L * 450 \ 1/h.$$

Für die obere Grenze (Max) ergibt sich folgende Abhängigkeit:

$$V/D^2 = L * 1250 \ 1/h.$$

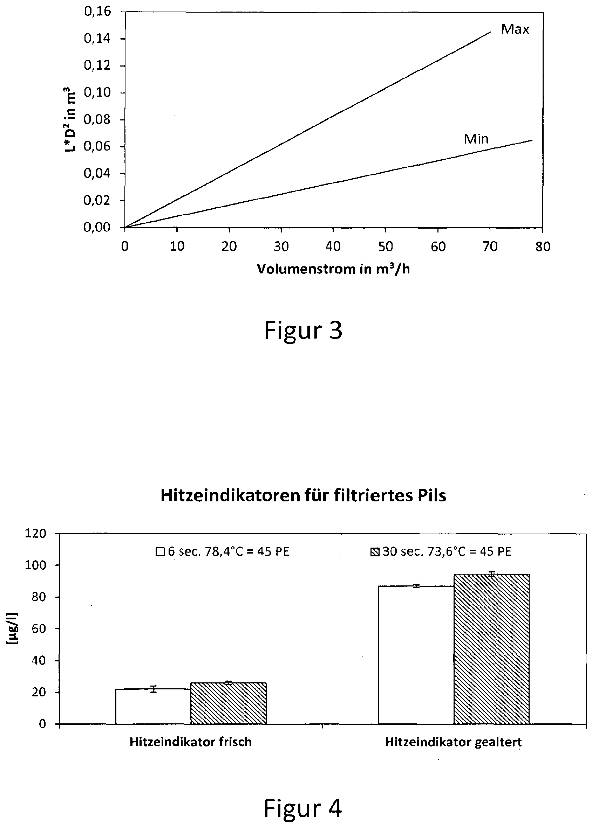

Figur 3 zeigt untere (Min) und obere (Max) Toleranzgrenzen hinsichtlich der Pasteurisierung/Stabilisierung von Bier und der geschmacklichen Qualität desselben, wobei auf der Ordinate die Länge der Rohrschlange der verwendeten Heißhalteeinrichtung multipliziert mit dem quadriertem Durchmesser derselben aufgetragen ist, und auf der Abszisse der angelegte Volumenstrom in der Rohrschlange aufgetragen ist. Für die untere Grenze (Min) ergibt folgende Abhängigkeit, wobei L die Länge der Heißhaltung in m, D der Durchmesser der Heißhaltung in m und V der Volumenstrom in m³/h bedeutet:

$$L*D^2 = 0,0008 \ h * V.$$

Für die obere Grenze (Max) ergibt sich folgende Abhängigkeit:

$$L*D^2 = 0,0021 \ h * V.$$

In Tabelle 2 sind vorteilhafte Parameterkombinationen für technisch relevante Anlagengrößen einer beispielhaften erfindungsgemäßen Vorrichtung gezeigt (Volumenströme zwischen 15 m³/h und 90 m³/h). Dabei ist für jede Nennleistung (100%) eine gemäß einer Ausführungsform der vorliegenden Erfindung optimal ausgeführte Heißhaltung mit dem Rohrleitungsdurchmesser in mm und der Länge in m dargestellt. In dieser Ausführungsform ist es nun möglich sowohl bei 100% Nennleistung als auch bei halber Leistung Weißbiere mit 220 PE und Heißhaltetemperaturen von über 80°C zu behandeln als auch filtrierte Biere wie Pils mit bspw. 28 PE und Heißhaltetemperaturen von unter 80°C zu pasteurisieren. Des Weiteren ist die mittlere Strömungsgeschwindigkeit sowie die daraus resultierende Re-Zahl abgebildet.

Tabelle 2

| Produktionsparameter | | Heißhaltung | | | | Weißbier | | filtrierte Biere | | Fluiddynamik | |
|---|---|---|---|---|---|---|---|---|---|---|---|
| Volume nstro m | Leistung | Länge | Durchmesser | Volumen | Verweilzeit | PE soll | Temp HH | PE soll | Temp HH | Gesch windigkeit | Re |
| m³/h | | m | mm | l | sec | - | °C | - | °C | m/s | - |
| 15 | 100% | 8 | 65 | 25,0 | 6,00 | 220 | 83,2 | 28 | 77,0 | 1,26 | 81.618 |
| 15 | 50% | 8 | 65 | 25,0 | 12,00 | 220 | 81,1 | 28 | 74,9 | 0,63 | 40.809 |
| 30 | 100% | 10 | 80 | 50,0 | 6,00 | 220 | 83,2 | 28 | 77,0 | 1,66 | 132.629 |
| 30 | 50% | 10 | 80 | 50,0 | 12,00 | 220 | 81,1 | 28 | 74,9 | 0,83 | 66.315 |
| 45 | 100% | 10 | 100 | 75,0 | 6,00 | 220 | 83,2 | 28 | 77,0 | 1,59 | 159.155 |
| 45 | 50% | 10 | 100 | 75,0 | 12,00 | 220 | 81,1 | 28 | 74,9 | 0,80 | 79.577 |
| 60 | 100% | 8 | 125 | 100,0 | 6,00 | 220 | 83,2 | 28 | 77,0 | 1,36 | 169.765 |
| 60 | 50% | 8 | 125 | 100,0 | 12,00 | 220 | 81,1 | 28 | 74,9 | 0,68 | 84.883 |
| 90 | 100% | 8 | 150 | 150,0 | 6,00 | 220 | 83,2 | 28 | 77,0 | 1,41 | 212.207 |
| 90 | 50% | 8 | 150 | 150,0 | 12,00 | 220 | 81,1 | 28 | 74,9 | 0,71 | 106.103 |

Mathematische Simulationen der Verweilzeitverteilung zeigen eine für diese jeweils voll turbulenten Strömungsprofile, eine sehr viel homogenere Verteilung bei der kurzen Heißhaltung. Durch die im Vergleich zum Stand der Technik kürzere durchströmte Länge mit weniger Umlenkungen ist die Zeitdifferenz zwischen langsamsten und schnellsten Partikel zum Ende der Heißhaltung sehr viel kleiner. Somit entfallen weniger Fluidteilchen auf eine zu lange Heißhaltezeit bei der kurzen Strecke und diese sollten damit zu einer Reduzierung der thermischen Gesamtbelastung beitragen. Auch kommt es bei der kurzen Strecke zu nahezu keiner Unterpasteurisation von Partikeln. Unter 1% der aufgegebenen Partikel verlässt vor Ablauf der auf die Mikrobiologie ausgelegten Heißhaltung von 6 Sekunden die Strecke. Bei der langen Heißhaltung des Stands der Technik hingegen verlassen rund 20% der aufgegebenen Partikel vor Ablauf der 30 Sekunden die Heißhaltung, und diese Partikel können damit möglicherweise nicht ausreichend thermisch behandelt werden.

Im Weiteren werden Versuchsergebnisse beschrieben, die mit einer Anlage mit einer 30 s Heißhaltung sowie mit einer Anlage, die gemäß der vorliegenden Erfindung mit einer Verweilzeit von 6 s betrieben wurde, erzielt wurden. Die Versuchsparameter und daraus resultierende Abtötungskinetik sind in Tabelle 3 wiedergegeben. Getestet wurden ein filtriertes Bier (Pils) sowie ein Weißbier.

Tabelle 3: Versuchsparameter

| Biersorte | Zeit [s] | Temperatur [°C] | PU [-] | Log [-] | Leitsubstanzen |
|-----------|----------|-----------------|--------|---------|----------------|
| Helles Weißbier | 30 | 80 | 378 | 24 | Lact. frigidus $D_{53°}$ 1,188 min, z = 15,395°C [11], Esterase [9] |
| | 6 | 83,2 [13] | 220 [9] | 7,7 [1] | |
| Pils | 30 | 73,6 | 45 [3,4] | 37 | Lact. brevis $D_{60°}$ 2 min, z = 7°C [12] |
| | 6 | 78,4 | 45 [3,4] | 36 | |

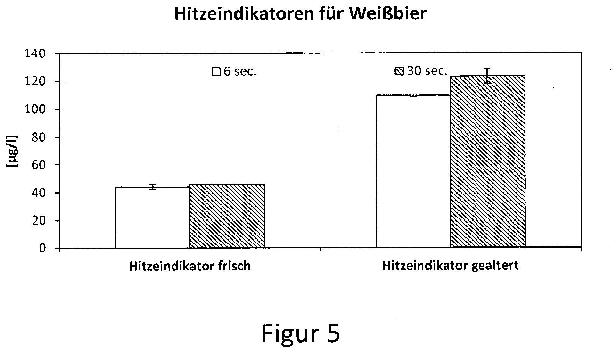

Bei den Weißbieren ergab sich in der Farbintensität kein Unterschied zwischen den Heißhalteverfahren (13,5 ± 0 vs. 13,5 ± 0,05 EBC). Die Figuren 4 und 5 zeigen bei den Hitzeindikatoren (Analysemethode: MEBAK Wort, Beer and Beer-based Beverages, method 2.23) insbesondere im gealterten Bier sowohl beim filtrierten Bier als auch beim Weißbier deutliche Unterschiede zugunsten der kurzen Heißhaltung.

Bei der Untersuchung der Trübungsindikatoren zeigten sich beim filtrierten Bier (Sorte Pils) bei gleichen PE's und den veranschlagten 78,4°C kein Unterschied in den Trübungswerten (siehe Tabelle 4).

Tabelle 4: Trübungsindikatoren im Vergleich Sorte Pils

| | 6 sek. bei 78,4°C | 30 sek. bei 72°C |
|---|---|---|
| Trübung 90° / 25° [EBC] 0°C | 0,28 / 0,10 | 0,26 / 0,10 |
| Trübung 90° / 25° [EBC] 20°C | 0,21 / 0,06 | 0,20 / 0,07 |

Für das filtrierte Bier wurde weiterhin die Schaumzahl (Analysemethode: Nibem WBBM 2.18.2) ermittelt. Diesbezüglich ergab sich ebenfalls kein Unterschied zwischen langer und kurzer Heißhaltung (279 ± 4 vs. 281 ± 0 Sekunden). In Summe lässt sich damit in dieser Ausführungsform diese Temperatur bei 6 Sekunden Heißhaltung als vorerst oberste Grenze für filtrierte Biere fixieren. Es hat sich gezeigt, dass bei dieser Temperatur/Zeit-Paarung der Bereich der KZE-Behandlung für Bierschädlinge in alkoholhaltigem Bier (40 PE) endet. Sollen auch alkoholfreie filtrierte Biere behandelt werden sind PE-Einheiten bis 70 empfehlenswert. Dies würde für die Kurzzeiterhitzung eine Heißhaltung bei der fixierten Temperatur von 78,4°C von 10 Sekunden bedeuten.

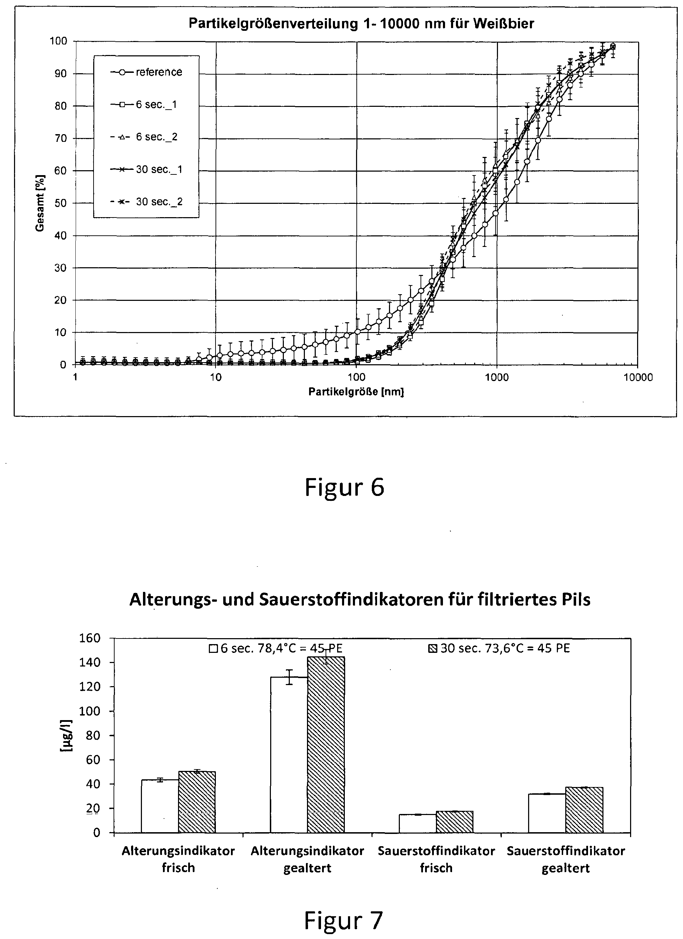

Als charakteristische Größe zur Beurteilung der Trübung wurde bei Weißbier die Partikelgrößenverteilung (Analysemethode: photometrisch) analysiert (siehe Figur 6). Im Vergleich zur Nullprobe vor der KZE zeigt sich der Erfolg der Erhitzung in einer deutlichen Vergröberung der Partikel. Demnach waren vor der KZE nur 29 % der Partikel in einem für die Trübung relevanten Bereich von 200 - 1000 nm (unter 200 nm ist die Lichtstreuung zu gering und oberhalb von 1000 nm die Sedimationsgeschwindigkeit zu hoch).

Nach der Kurzzeiterhitzung liegen ca. 55% der Partikel in diesem Bereich und trugen zu einer von der Hefe unabhängigen stabilen Trübung bei. Zwischen den beiden Heißhalteverfahren ergab sich hingegen kein deutlicher Unterschied. Entscheidend für die Denaturierung ist demnach (wie in der gängigen Literatur schon beschrieben) die Überschreitung einer entsprechenden Temperatur (80°C), die Zeit spielt dabei eine untergeordnete Rolle.

Entscheidend für eine Leistungsanpassung ist auch die Erkenntnis, dass ein Temperaturunterschied von 3,2°C keinen signifikanten Einfluss hat. Demnach ist es möglich mit der verkürzten Heißhaltung bei konstanten 220 PE, die Leistung bis zum Erreichen von > 80°C anzupassen, ohne eine Beeinflussung der Trübung befürchten zu müssen.

Weiterhin wurde die Auswirkung des erfindungsgemäßen Kurzzeiterhitzungsverfahrens auf die Bierqualität und das Aroma untersucht (Analysemethode: MEBAK Wort, Beer and Beer-based Beverages, method 2.21) Es ergaben sich beim Vergleich der filtrierten Sorte Pils bei gleichen PE's bessere Werte bei der kurzen Heißhaltung. Sowohl im frischen wie auch im forciert gealterten Bier zeigte das Bier mit der kurzen Heißhaltung niedrigere Summenwerte bei den Sauerstoff- und Alterungsindikatoren (siehe Figur 7).

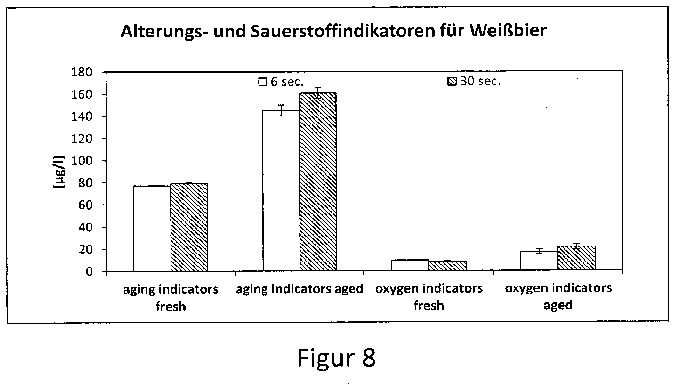

Ebenfalls zeigten sich beim Vergleich der Sorte Weißbier bessere Werte bei der kurzen Heißhaltung. Sowohl im frischen wie auch im forciert gealterten Bier zeigte das Bier mit der kurzen Heißhaltung niedrigere Summenwerte bei den Sauerstoff- und Alterungsindikatoren (siehe Figur 8).

Mikrobiologisch waren sowohl das filtrierte wie auch das unfiltrierte Bier gleichermaßen stabil, also ohne Befund. Auch die Rückstellproben zeigten keine mikrobiologischen oder trübungstechnischen Veränderungen

Zusammenfassend lassen beispielhaft die in Tabelle 5 gelisteten Empfehlungen für die Zeit-/Temperaturkombination bei der thermischen Behandlung von Bier angeben.

Tabelle 5: Empfohlene Auslegungsparameter für Bier-Kurzzeiterhitzer

| Biersorten | Länge Heißhaltung | Temperaturen 100 % Leistung* | Temperaturen 50 % Leistung* |
|---|---|---|---|
| Alkoholisches, filtriertes Bier | 6 Sekunden | 77 °C (28 PU) 78,4°C (45 PU) Maximum | 74,9°C (28 PU) 76,3 °C (45 PU) |
| Alkoholfreies filtriertes Bier | 10 Sekunden | 78,2°C (70 PU) Maximum | 76,1 °C (70 PU) |
| Unfiltriertes Bier | 6 Sekunden | 83,6 °C (220 PU) 82,1°C (150 PU) | 81,1 °C (220 PU) 80,0 °C (150 PU) Minimum |
| Alkoholfreies filtriertes Bier in Kombination mit alkoholischem Bier | 10 Sekunden | **Unfiltriertes Bier:** 81,5°C (220 PU) 80,5 °C (150 PU)  **Filtriertes alkoholisches Bier:** 75,5 °C (28 PU) 76,9°C (45 PU) **Filtriertes A-Frei:** 78,2°C (70 PU) Maximum | **Unfiltriertes Bier:** 81,1 °C (220 PU) 80 °C* (150 PU) *Minimum bei **90 %** der Leistung erreicht!  **Filtriertes alkoholisches Bier:** 73,4 °C (28 PU) 74,8°C (45 PU) **Filtriertes A-Frei:** 76,1 °C (70 PU) |
| *Werte errechnet mit Gleichung 1 | | | |

**Patentansprüche**

1.    Vorrichtung zum thermischen Behandeln von Bier, mit

einem Kurzzeiterhitzer (1); und
einer mit dem Kurzzeiterhitzer (1) verbundenen Heißhalteeinrichtung (2), die eine Rohrschlange (2a) zum Heißhalten des Bieres aufweist;
**dadurch gekennzeichnet, dass**
die Rohrschlange (2a) eine Länge von nicht mehr als 12 m, insbesondere 4 m bis 10 m, aufweist, und die Rohrschlage einen Durchmesser von 0,05 m bis 0,2 m aufweist.

2.    Vorrichtung gemäß Anspruch 1, in der der Kurzzeiterhitzer (1) dazu ausgebildet ist, filtrierte Biere auf eine Temperatur zwischen 75°C und maximal 78,5°C zu erhitzen und unfiltrierte Biere zwischen 80°C und maximal 85°C zu erhitzen.

3.    Vorrichtung zur Herstellung von Bier mit einer Gärvorrichtung zum Gären des Bieres und einer Vorrichtung gemäß Anspruch 1 oder 2.

4. Verfahren zum thermischen Behandeln von Bier, mit den Schritten:

Erhitzen des Biers in einem Kurzzeiterhitzer (1);
Leiten des erhitzten Biers in eine Heißhalteeinrichtung (2); und
**gekennzeichnet durch**
Heißhalten des Bieres in einer Rohrschlange (2a) der Heißhalteeinrichtung (2), wobei die Rohrschlange (2a) eine Länge von unterhalb 12 m, insbesondere 4 m bis 10 m, und einen Durchmesser von 0,05 m bis 0,2 m aufweist.

5. Verfahren gemäß Anspruch 4, wobei das Heißhalten über einen Zeitraum von weniger als 20 s, insbesondere weniger als 15 s, insbesondere weniger oder gleich 10 s, erfolgt.

6. Verfahren gemäß einem der Ansprüche 4 bis 5, in dem ein filtriertes Biere auf eine Temperatur oberhalb von 75°C und/oder ein unfiltriertes Bier auf eine Temperatur oberhalb von -80°C, erhitzt wird.

7. Verfahren gemäß einem der Ansprüche, in dem das filtrierte Bier auf eine Temperatur bis zu 78,5°C und/oder das unfiltrierte Bier auf eine Temperatur bis zu 90°C, insbesondere bis zu maximal 85°C erhitzt wird.

8. Verfahren gemäß einem der Ansprüche 4 bis 7, in dem das Bier mit einem Volumenstrom zwischen 10 m$^3$/h und 100 m$^3$/h, insbesondere zwischen 15 m$^3$/h und 90 m$^3$/h durch die Heißhalteeinrichtung (2) transportiert wird.

9. Verfahren gemäß einem der Ansprüche 4 bis 8, in dem das Verhältnis von Volumenstrom des Bieres zum Durchmesser der Rohrschlange (2a) zum Quadrat zwischen L*450 /h und L*1250 /h liegt, wobei L die Länge der Rohrschlange (2a) ist.

10. Verfahren gemäß einem der Ansprüche 4 bis 9, in dem das Produkt aus Länge der Rohrschlange (2a) und Durchmesser der Rohrschlange (2a) zum Quadrat zwischen V*0,0008 h und V*0,0021 h liegt, wobei V der Volumenstrom des Bieres in m$^3$/h ist.

11. Verfahren gemäß einem der Ansprüche 4 bis 10, wobei eine Leistungsspreizung zwischen 30% und 100%, insbesondere zwischen 50% und 100%, liegt.

12. Verfahren gemäß einem der Ansprüche 4 bis 11, in dem das Bier filtriertes Bier oder unfiltriertes Bier, insbesondere Weißbier, oder untergäriges Bier oder obergäriges Bier ist.

13. Verfahren gemäß Anspruch 12, in dem das Bier filtriertes Bier ist und die Länge der Rohrschlange (2a) 6 m bis 8 m ist, der Durchmesser der Rohrschlange (2a) 0,065 m bis 0,15 m ist, der Volumenstrom des filtrierten Biers in der Rohrschlange (2a) 15 bis 90 m$^3$/h ist, die Heißhaltezeit 0,08 min bis 0,19 min ist und die Heißhaltetemperatur 75,1 bis 78,5 °C ist.

14. Verfahren gemäß Anspruch 12, in dem das Bier unfiltriertes Weißbier ist und die Länge der Rohrschlange (2a) 6 m bis 8 m ist, der Durchmesser der Rohrschlange (2a) 0,065 m bis 0,15 m ist, der Volumenstrom des filtrierten Biers in der Rohrschlange (2a) 15 bis 90 m$^3$/h ist, die Heißhaltezeit 0,08 min bis 0,19 min ist und die Heißhaltetemperatur 80,2 bis 83,6 °C ist.

**Claims**

1. Device for thermally treating beer, with

a flash pasteuriser (1); and
a heat-retention unit (2) which is connected to the flash pasteuriser (1) and which has a serpentine pipe (2a) for keeping the beer hot;
**characterised in that**
the serpentine pipe (2a) has a length of not more than 12 metres, in particular 4 metres to 10 metres, and the serpentine pipe has a diameter of 0.05 metres to 0.2 metres.

2. Device according to claim 1, in which the flash pasteuriser (1) is designed to heat up filtered beers to a temperature of between 75°C and a maximum of 78.5°C, and to heat unfiltered beers between 80°C and a maximum of 85°C.

3. Device for the production of beer with a fermentation device for fermenting the beer and a device according to claim 1 or 2.

4. Method for thermally treating beer, with the steps:

heating the heated beer in a flash pasteuriser (1);
piping the beer into a heat-retention unit (2); and
**characterised by**
keeping the beer hot in a serpentine pipe (2a) of the heat-retention unit (2), wherein the serpentine pipe (2a) has a length of less than 12 metres, in particular 4 metres to 10 metres, and a diameter of 0.05 metres to 0.2 metres.

5. Method according to claim 4, wherein the beer is kept hot over a time period of less than 20 seconds, in particular less than 15 seconds, in particular less than or equal to 10 seconds.

6. Method according to one of the claims 4 to 5, in which a filtered beer is heated to a temperature above 75°C and/or an unfiltered beer is heated to a temperature above -80°C [*sic*].

7. Method according to one of the claim 6 [sic], in which the filtered beer is heated to a temperature of up to 78.5°C and/or the unfiltered beer is heated to a temperature of up to 90°C, in particular to a maximum of 85°C.

8. Method according to one of the claims 4 to 7, in which the beer is transported through the heat-retention unit (2) at a volume flow of between 10 m$^3$/h and 100 m$^3$/h, in particular between 15 m$^3$/h and 90 m$^3$/h.

9. Method according to one of the claims 4 to 8, in which the ratio of the volume flow of the beer to the diameter of the serpentine pipe (2a) squared is between L*450/h and L*1250/h, where L is the length of the serpentine pipe (2a).

10. Method according to one of the claims 4 to 9, in which the product of the length of the serpentine pipe (2a) and the diameter of the serpentine pipe (2a) squared is between V*0.0008 h and V*0.0021 h, where V is the volume flow of the beer in m$^3$/h.

11. Method according to one of the claims 4 to 10, wherein the performance distribution lies between 30% and 100%, in particular between 50% and 100%.

12. Method according to one of the claims 4 to 11, in which the beer is filtered beer or unfiltered beer, in particular wheat beer, or bottom-fermented beer or top-fermented beer.

13. Method according to claim 12, in which the beer is filtered beer and the length of the serpentine pipe (2a) is 6 metres to 8 metres, the diameter of the serpentine pipe (2a) is 0.065 metres to 0.15 metres, the volume flow of the filtered beer in the serpentine pipe (2a) is 15 to 90 m$^3$/h, the heat-retention time is 0.08 minutes to 0.19 minutes, and the heat-retention temperature is 75.1 to 78.5°C.

14. Method according to claim 12, in which the beer is unfiltered wheat beer and the length of the serpentine pipe (2a) is 6 metres to 8 metres, the diameter of the serpentine pipe (2a) is 0.065 metres to 0.15 metres, the volume flow of the filtered [sic] beer in the serpentine pipe (2a) is 15 to 90 m$^3$/h, the heat-retention time is 0.08 minutes to 0.19 minutes, and the heat-retention temperature is 80.2 to 83.6°C.

**Revendications**

1. Dispositif de traitement thermique de bière, comprenant :

un dispositif de chauffage rapide (1) ; et
un dispositif de maintien au chaud (2) relié au dispositif de chauffage rapide (1), qui présente un serpentin (2a) pour maintenir la bière au chaud ;

**caractérisé en ce que**
le serpentin (2a) présente une longueur de pas plus de 12 m, en particulier de 4 m à 10 m, et le serpentin présente un diamètre de 0,05 m à 0,2 m.

2. Dispositif selon la revendication 1, dans lequel le dispositif de chauffage rapide (1) est conçu pour chauffer des bières filtrées à une température comprise entre 75°C et 78,5°C au maximum et pour chauffer des bières non filtrées entre 80°C et 85°C au maximum.

3. Dispositif pour la production de bière avec un dispositif de fermentation pour la fermentation de la bière et un dispositif selon la revendication 1 ou 2.

4. Procédé de traitement thermique de bière, comprenant les étapes consistant à :

chauffer la bière dans un dispositif de chauffage rapide (1) ;
guider la bière chauffée dans un dispositif de maintien au chaud (2) ; et
**caractérisé par** l'étape consistant à
maintenir au chaud la bière dans un serpentin (2a) du dispositif de maintien au chaud (2), dans lequel le serpentin (2a) présente une longueur inférieure à 12 m, en particulier de 4 m à 10 m, et un diamètre de 0,05 m à 0,2 m.

5. Procédé selon la revendication 4, dans lequel le maintien au chaud survient sur une durée inférieure à 20 s, en particulier inférieure à 15 s, en particulier inférieure ou égale à 10 s.

6. Procédé selon l'une quelconque des revendications 4 à 5, dans lequel une bière filtrée est chauffée à une température supérieure à 75°C et/ou une bière non filtrée est chauffée à une température supérieure à -80°C.

7. Procédé selon la revendication 6, dans lequel la bière filtrée est chauffée à une température allant jusqu'à 78,5°C et/ou la bière non filtrée est chauffée à une température allant jusqu'à 90°C, en particulier jusqu'à 85°C au maximum.

8. Procédé selon l'une quelconque des revendications 4 à 7, dans lequel la bière est transportée à travers le dispositif de maintien au chaud (2) avec un débit volumique compris entre 10 $m^3$/h et 100 $m^3$/h, en particulier entre 15 $m^3$/h et 90 $m^3$/h.

9. Procédé selon l'une quelconque des revendications 4 à 8, dans lequel le rapport du débit volumique de la bière au diamètre du serpentin (2a) au carré est compris entre L*450 /h et L*1250 /h, L étant la longueur du serpentin (2a).

10. Procédé selon l'une quelconque des revendications 4 à 9, dans lequel le produit de la longueur du serpentin (2a) et du diamètre du serpentin (2a) au carré est compris entre V*0,0008 h et V*0,0021 h, V étant le débit volumique de la bière en $m^3$/h.

11. Procédé selon l'une quelconque des revendications 4 à 10, dans lequel un écart de puissance est compris entre 30 % et 100 %, en particulier entre 50 % et 100 %.

12. Procédé selon l'une quelconque des revendications 4 à 11, dans lequel la bière est de la bière filtrée ou de la bière non filtrée, en particulier de la bière blanche, ou de la bière basse fermentation ou de la bière de haute fermentation.

13. Procédé selon la revendication 12, dans lequel la bière est de la bière filtrée et la longueur du serpentin (2a) est de 6 m à 8 m, le diamètre du serpentin (2a) est de 0,065 m à 0,15 m, le débit volumique de la bière filtrée dans le serpentin (2a) est de 15 à 90 $m^3$/h, le temps de maintien au chaud est de 0,08 min à 0,19 min et la température de maintien au chaud est de 75,1 à 78,5°C.

14. Procédé selon la revendication 12, dans lequel la bière est de la bière blanche non filtrée et la longueur du serpentin (2a) est de 6 m à 8 m, le diamètre du serpentin (2a) est de 0,065 m à 0,15 m, le débit volumique de la bière filtrée dans le serpentin (2a) est de 15 à 90 $m^3$/h, le temps de maintien au chaud est de 0,08 min à 0,19 min et la température de maintien au chaud est de 80,2 à 83,6°C.

Figur 1

Figur 2

Figur 3

Hitzeindikatoren für filtriertes Pils

Figur 4

Hitzeindikatoren für Weißbier

Figur 5

## Partikelgrößenverteilung 1- 10000 nm für Weißbier

Figur 6

## Alterungs- und Sauerstoffindikatoren für filtriertes Pils

Figur 7

## Alterungs- und Sauerstoffindikatoren für Weißbier

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3040943 A1

- EP 1146116 B1